# EUROPÄISCHE PATENTSCHRIFT

(11) **EP 2 667 167 B1**
(45) Veröffentlichungstag und Bekanntmachung des Hinweises auf die Patenterteilung: **02.09.2015**
(21) Anmeldenummer: 13167751.0
(22) Anmeldetag: 15.05.2013
(51) Int. Cl.: G01K 13/00

(54) **Gargutthermometer mit Gleichstrom-Energieerzeugungseinheit**
Food thermometer with direct current energy generating unit
Thermomètre pour produit de cuisson avec unité de production d'énergie à courant continu

(30) Priorität: 21.05.2012 DE 102012208434
(43) Veröffentlichungstag der Anmeldung: 27.11.2013
(73) Patentinhaber: BSH Hausgeräte GmbH, 81739 München (DE)
(72) Erfinder: Schemmerer, Roman, 83349 Palling (DE); Sippel, Matthias, 83329 Waging am See (DE); Vormann, Ingo, 83413 Fridolfing (DE)

(56) Entgegenhaltungen:
- CH-A- 381 746
- DE-A1- 19 705 645
- DE-A1-102007 018 245
- DE-C3- 2 425 444

## Beschreibung

Die Erfindung betrifft ein Gargutthermometer mit mindestens einer Gleichstrom-Energieerzeugungseinheit.

Insbesondere für automatisierte Garprozesse ist eine möglichst genaue Temperaturmessung eines Garguts von Vorteil für eine schnelle und effiziente Regelung eines Kochprozesses. Es ist bekannt, die Temperatur von Gargut in einem Gargeschirr mittels eines zugehörigen Temperatursensors zu messen, die Daten von dem Gargeschirr mittels eines Senders drahtlos an einen Empfänger des Kochfeldes zu übertragen und die Daten von dem Empfänger weiter an ein damit verbundenes Regelmodul zu leiten. Die Energieversorgung des Temperatursensors und des Sensors kann jedoch problematisch sein, da keine Batterien oder Akkus für einen längerfristigen Einsatz über 100°C zur Verfügung stehen. Ausweichmöglichkeiten bieten hier in das Gargeschirr integrierte Thermowandler, Solarzellen, oder alternativ eine elektromagnetische Fernspeisung. Jedoch weisen diese Ausweichmöglichkeiten Probleme auf: So besitzen Thermowandler einen komplexen Aufbau und benötigen eine minimal Temperaturdifferenz und meistens ausgeprägte Kühlkörper. Solarzellen können leicht abgeschattet werden. Ein Wirkungsgrad der,elektromagnetischen Fernspeisung sinkt proportional zur Entfernung im Quadrat, ist also nur für Nahfeldanwendungen geeignet.

Beispielsweise offenbart DE 10 2007 018 245 A1 eine Temperatursonde (Bratenspieß oder Kerntemperaturfühler) für einen Ofen, welche mittels eines Thermowandlers betrieben wird. EP 1 624 724 B1 offenbart ein System und eine Sonde zur Detektion zumindest eines Parameters auf der Grundlage eines Thermowandlers. DE 10 2005 015 028 B4 offenbart ein Verfahren zur Temperaturmessung bei einem Haushaltsgerät mittels elektromagnetische Fernspeisung. Eine elektromagnetische Fernspeisung nutzt auch ein Kochregelsystem gemäß US 7,080,593 B1.

Es ist die **Aufgabe** der vorliegenden Erfindung, die Nachteile des Standes der Technik zumindest teilweise zu überwinden und insbesondere eine einfache und zuverlässige Möglichkeit zur Gartemperaturmessung auch bei hohen Temperaturen bereitzustellen.

Diese Aufgabe wird gemäß den Merkmalen der unabhängigen Ansprüche gelöst Bevorzugte Ausführungsformen sind insbesondere den abhängigen Ansprüchen entnehmbar.

Die Aufgabe wird gelöst durch ein Gargutthermometer mit mindestens einer Gleichstrom-Energieerzeugungseinheit, wobei die mindestens eine Gleichstrom-Energieerzeugungseinheit mehrere getrennte (sich also nicht kontaktierende), außenliegende Elektroden aus unterschiedlichem Metall aufweist.

Die Elektroden können Elektroden einer galvanischen Zelle bilden. Bei einer galvanischen Zelle wird in einem spontanen Umwandlungsprozess chemische in elektrische Energie gewandelt, wobei eine Kombination von Elektroden aus unterschiedlichem Metall (und damit mit einem unterschiedlichen Standardpotenzial) und einem die Elektroden verbindenden Elektrolyten eine Gleichspannungsquelle bildet. Bei dem Gargutthermometer wird ausgenutzt, dass Gargut fast immer Salze und somit Ionen enthält und folglich als Elektrolyt nutzbar ist. Wird also das Gargutthermometer mit seinen (mindestens zwei) Elektroden in Kontakt mit Gargut gebracht, bildet sich eine galvanische Zelle, deren Gleichspannung an den Elektroden abgreifbar ist. Die Höhe der sich ergebenden Gleichspannung ist abhängig vom Redoxpotential der beteiligten Elektroden. Die Gleichspannung kann direkt an den Elektroden abgegriffen werden, welche also als Pole der galvanischen Zelle dienen können.

Die Gleichstrom-Energieerzeugungseinheit und ein damit ausgerüstetes Gargutthermometer weisen den Vorteil auf, dass sie auch bei hohen Temperaturen des Garguts von über 100°C langfristig einsetzbar sind, dass die Höhe der von der Gleichstrom-Energieerzeugungseinheit erzeugten Spannung im Wesentlichen konstant ist und die Gleichstrom-Energieerzeugungseinheit sehr einfach aufgebaut sein kann.

Es ist eine Weiterbildung, dass an die Gleichstrom-Energieerzeugungseinheit mindestens eine Schaltung, ein Temperaturfühler und/oder mindestens ein Sender (einfacher Sender oder Sender-Empfänger) elektrisch angeschlossen sind. Die Gleichstrom-Energieerzeugungseinheit betreibt folglich den mindestens einen Temperaturfühler und/oder mindestens ein Sender. Diese Elemente können einzeln oder zusammen als integrierte Schaltkreise vorliegen.

Das Gargutthermometer kann auch als ein Temperaturmessgerät für Gargut o.ä. bezeichnet werden.

Es ist eine Ausgestaltung, dass die Elektroden mindestens eine als Anode einer galvanischen Zelle dienende Elektrode aufweisen, wobei die mindestens eine Anode auswechselbar ist. Da das Anodenmaterial sich mit der Zeit auflöst (die Anode dient als Opferelektrode) kann das Gargutthermometer durch eine Auswechselbarkeit der Anode für eine sehr lange Zeit verwendet werden.

Es ist noch eine Ausgestaltung, dass die mindestens eine Anode bzw. als Anode dienende Elektrode aufsteckbar ist. Das Aufstecken ermöglicht eine einfache Entfernung der teilweise aufgelösten Anode und ein einfaches Wiederbefestigen einer neuen Anode. Das Aufstecken kann mittels einer Klemmverbindung und/oder einer Rastverbindung (z.B. durch ein Aufklipsen o.ä.) geschehen.

Es ist eine Weiterbildung, dass als Elektrodenmaterialen Gold, Platin, Silber, Titan, Magnesium oder z.B. eine Legierung davon zum Einsatz kommen, da diese Elemente für einen Organismus keine Toxizität aufweisen.

Ein Standardpotential E° von ausgesuchten Metallen liegt beispielsweise wie folgt: Gold (Au): +1,40 V bis +1,69 V (je nach Oxidationszahl); Platin (Pt): +1,20 V; Silber (Ag): +0,80 V; Titan (Ti): -1,21V und Magnesium (Mg): -2,372 V. Die Spannung der edlen Metalle (Standardpotential > 0 V) reduziert sich jedoch auf das Standardpotential von Wasserstoff (0 V), da dieser, bzw. H+-Ionen, die eigentlichen Reaktionspartner sind. Dabei kann insbesondere an der Anode die Reaktion An -> An^{x+}_{(aq)} + x e⁻ und an der Kathode die Reaktion 2H⁺_{(aq)} + 2 e⁻ -> H² ablaufen.

Es ist eine weitere Ausgestaltung, dass ein Material mindestens einer als Kathode (einer galvanischen Zelle) dienenden Elektrode ein Metall mit einem positiven Standardpotenzial oder Redoxpotenzial, insbesondere Edelmetall, z.B. Gold, Platin und/oder Silber, aufweist. Diese Materialien sind widerstandsfähig gegenüber chemischen Reaktionen. Jedoch kann insbesondere auch mindestens ein anderes Edelmetall und/oder eine Legierung davon als ein Kathodenmaterial verwendet werden.

Es ist noch eine weitere Ausgestaltung, dass ein Material mindestens einer als Anode (einer galvanischen Zelle) dienenden Elektrode ein Metall mit einem negativen Standardpotenzial oder Redoxpotenzial aufweist, insbesondere Titan und/oder Magnesium. Diese Materialien sind preiswert genug, dass ein Auswechseln einer damit aufgebauten Anode preiswert ist.

Die Kathoden und Anoden können als Vollkörper vorliegen, oder als ein Körper, der mit dem für eine galvanische Reaktion gewünschten Metall beschichtet ist. Insbesondere die Kathode(n) können z.B. mit Edelmetall beschichtete Elektrodenkörper sein, was Kosten senken kann. Insbesondere die Anode(n) können als Vollkörper vorliegen, was einen Zeitraum zum Austausch verlängert.

Es ist auch eine Ausgestaltung, dass zu mehreren galvanischen Zellen zugehörige Elektroden kaskadiert verschaltet sind. Die Elektroden bzw. die entsprechenden Spannungsquellen können insbesondere in Reihe geschaltet sein, z.B. um ein höheres Spannungsniveau zum Betreiben von nachgeschalteten elektrischen Bauteilen (Sender, Sensor(en) usw.) zu ermöglichen. Die Elektroden bzw. die entsprechenden Spannungsquellen können zusätzlich oder alternativ parallel geschaltet sein, z.B. um einen höheren maximalen Strom zum Betreiben von nachgeschalteten elektrischen Bauteilen (Sender, Sensor(en) usw.) zu ermöglichen.

Es ist ferner eine Ausgestaltung, dass das Gargutthermometer einen Gleichspannungswandler aufweist. Hierdurch lässt sich eine von den Elektroden bzw. der zugehörigen mindestens einen galvanischen Zelle erzeugte Spannung auf ein zum Betreiben der nachgeschalteten elektrischen Bauelemente, insbesondere mindestens eines integrierten Schaltkreises, präzise definierbares Niveau einstellen.

Es ist darüber hinaus eine Ausgestaltung, dass das Gargutthermometer als ein Löffel ausgestaltet ist. Dadurch kann der Löffel sowohl zum Handhaben von Gargut als auch zur Temperaturmessung herangezogen werden.

Es ist außerdem eine Ausgestaltung, dass die Elektroden an einer Rückseite einer Laffe des löffelartig ausgestalteten Gargutthermometers angeordnet sind.

Alternativ mag das Gargutthermometer als ein Bratenspieß oder Kerntemperaturfühler ausgebildet sein. Auch mag das Gargutthermometer in Form eines "Kocheis" vorliegen, welches insbesondere in Gargut eingetaucht werden kann.

Entsprechend wird die Aufgabe auch gelöst z.B. durch ein in Gargut einzutauchendes Besteck (Löffel o.ä.) oder ein Bratenthermometer mit einer solchen Gleichstrom-Energieerzeugungseinheit.

In den folgenden Figuren wird die Erfindung anhand eines Ausführungsbeispiels schematisch genauer beschrieben.

Die **Figur** zeigt ein in Form eines Löffels ausgestaltetes Gargutthermometer 1 mit einer Gleichstrom-Energieerzeugungseinheit 2. Die Gleichstrom-Energieerzeugungseinheit 2 weist mehrere getrennte, außenliegende bzw. oberflächliche Elektroden 3a, 3b, 4 auf. Während zwei seitliche Elektroden 3a und 3b ähnlich zueinander aufgebaut sind und aus einem gleichen Metall bestehen, ist eine dazwischen beabstandet angeordnete, mittige Elektrode 4 breiter aufgebaut und besteht aus einem zu den Elektroden 3a und 3b unterschiedlichen Metall. Die Elektroden 3a, 3b, 4 sind an einer rückseitigen Oberfläche O einer Laffe 5 des löffelförmigen Gargutthermometers 1 angeordnet.

Bei einem Eintauchen der Laffe 5 in Gargut, z.B. Suppe, kommt es zu einem Kontakt des Garguts mit den Elektroden 3a, 3b und 4. Die Elektroden 3a und 4 bilden dann aufgrund des typischerweise ionenhaltigen Garguts eine erste galvanische Zelle, und die Elektroden 3b und 4 bilden eine zweite galvanische Zelle. Dadurch bildet sich eine Spannungsdifferenz sowohl zwischen den Elektroden 3a und 4, als auch zwischen den Elektroden 3b und 4.

In dem vorliegenden Ausführungsbeispiel dienen die seitlichen Elektroden 3a, 3b als Kathoden und die mittige Elektrode 4 als eine Anode. Die seitlichen Elektroden 3a, 3b sind fest an der Laffe 5 angeordnet und bestehen aus einem chemisch widerstandsfähigen und für den Menschen ungiftigen Metall, z.B. aus einem Edelmetall wie Gold, Platin und/oder Silber.

Die mittige Elektrode 4 bzw. Anode löst sich bei einer galvanischen Nutzung mit der Zeit auf und besteht deshalb aus einem preiswerten und für den Menschen unbedenklichen Metall, z.B. aus Titan und/oder Magnesium. Um eine grundsätzlich unbegrenzte Gebrauchsdauer des Gargutthermometers 1 zu erreichen, ist die Elektrode 4 bzw. Anode auswechselbar, d.h., dass sie von einem Nutzer ausgetauscht werden kann, falls sie für einen Gebrauch mit der Gleichstrom-Energieerzeugungseinheit 2 nicht mehr genügend Material aufweist. Dies kann beispielsweise dadurch realisiert sein, dass die Elektrode 4 aufsteckbar, insbesondere aufrastbar, ausgestaltet ist. Die Laffe 5 kann entsprechend eine Steckaufnahme, insbesondere Rastaufnahme, für die Elektrode 4 aufweisen. Die Elektrode 4 kann also insbesondere auf die Laffe 5 aufrastbar oder aufklipsbar sein.

Die zu zwei galvanischen Zellen zugehörigen Elektroden 3a und 4 bzw. 3b und 4 sind zueinander kaskadiert elektrisch, und zwar hier rein beispielhaft elektrisch parallel, geschaltet. Die Elektroden 3a, 3b, 4 sind als Gleichstrom-Energieerzeugungseinheit 2 über elektrische Leitungen 6a, 6b mit einem Gleichspannungswandler 7 verbunden, welcher die von der Gleichstrom-Energieerzeugungseinheit 2 erzeugte Spannung an eine zum Betreiben eines Senders 8 geeignete Spannung anpasst. Der Sender 8 ist über mindestens eine elektrische Leitung (o.Abb.) mit einem ebenfalls im Bereich der Laffe 5 angeordneten Temperaturfühler 9 verbunden. Der Gleichspannungswandler 7 und der Sender 8 sind, unter anderem um eine Umgebungstemperatur lokal an ihrer Stelle gering zu halten, in einem Griffteil 10 des Gargutthermometers 1 untergebracht.

Zum Betrieb wird das Gargutthermometer 1 mit der Laffe 5 in Gargut eingeführt. Daraufhin bilden die Elektroden 3a, 3b, 4 eine galvanische Zelle als Gleichstrom-Energieerzeugungseinheit 2, deren Spannung zum Betrieb des Senders 8 und des Temperaturfühlers 9 (z.B. eines Platin-Temperaturfühlers, z.B. Pt1000) verwendet wird. Der Sender 8 kann so beispielsweise in regelmäßigen Abständen Temperaturdaten drahtlos aussenden, die von einem geeigneten Gargerät empfangen werden können, z.B. von einem Ofen und/oder einem Kochfeld.

Selbstverständlich ist die vorliegende Erfindung nicht auf das gezeigte Ausführungsbeispiel beschränkt.

So können die zwei seitlichen Elektroden 3a, 3b bzw. Kathoden auch als eine einzige Elektrode 3 ausgestaltet sein. Die Gleichstrom-Energieerzeugungseinheit 2 weist dann nur die Elektroden 3 (Kathode) und 4 (Anode) einer einzigen galvanischen Zelle auf.

Allgemein können ein oder mehrere Kathoden und ein oder mehrere Anoden vorhanden sein. Die unterschiedliche Metallzusammensetzung betrifft Anode(n) und Kathode(n). Jedoch können bei einem Vorliegen von mehreren Kathoden zumindest zwei der Kathoden aus einem unterschiedlichen Metall bestehen, und analog können bei einem Vorliegen von mehreren Anoden zumindest zwei der Anoden aus einem unterschiedlichen Metall bestehen. Dadurch mag beispielsweise ein Spannungsniveau der Gleichstrom-Energieerzeugungseinheit genauer an einen gewünschten Sollwert herangeführt werden.

Das Gargutthermometer mag auch als ein einfacher Stab, ein Rührlöffel, ein Kerntemperaturfühler, ein Kochei oder in jeder anderen beliebigen Form ausgebildet sein.

### Bezugszeichenliste

- 1: Gargutthermometer
- 2: Gleichstrom-Energieerzeugungseinheit
- 3: seitliche Elektrode (Kathode)
- 3a: seitliche Elektrode (Kathode)
- 3b: seitliche Elektrode (Kathode)
- 4: mittige Elektrode (Anode)
- 5: Laffe
- 6a: elektrische Leitung
- 6b: elektrische Leitung
- 7: Gleichspannungswandler
- 8: Sender
- 9: Temperaturfühler
- 10: Griffteil
- O: rückseitige Oberfläche der Laffe

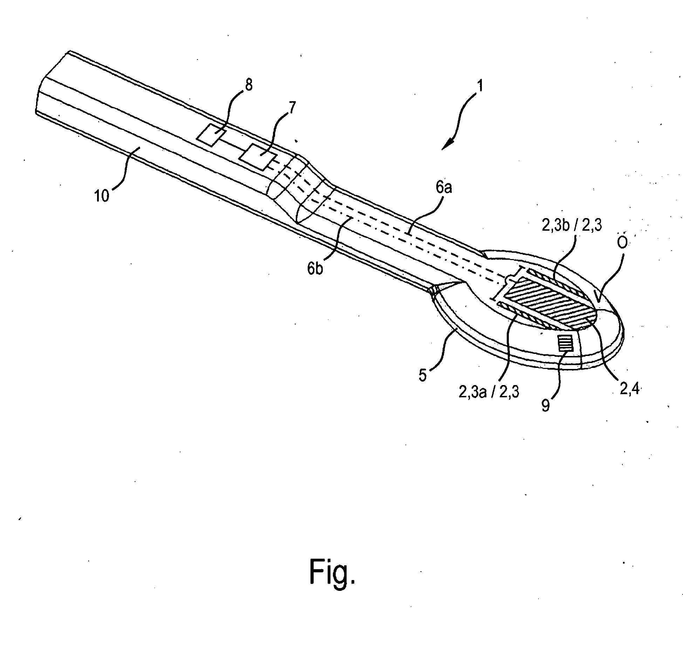

## Patentansprüche

1. Gargutthermometer (1) mit mindestens einer Gleichstrom-Energieerzeugungseinheit (2), **dadurch gekennzeichnet, dass** die mindestens eine Gleichstrom-Energieerzeugungseinheit (2) mehrere getrennte, außenliegende Elektroden (3, 4; 3a, 3b, 4) aus unterschiedlichem Metall aufweist.

2. Gargutthermometer (1) nach Anspruch 1, **dadurch gekennzeichnet, dass** die Elektroden (3,4; 3a, 3b, 4) mindestens eine als Anode einer galvanischen Zelle dienende Elektrode (4) aufweisen, welche auswechselbar ist.

3. Gargutthermometer (1) nach Anspruch 2, **dadurch gekennzeichnet, dass** die mindestens eine als Anode dienende Elektrode (4) aufsteckbar ist.

4. Gargutthermometer (1) nach einem der vorhergehenden Ansprüche, **dadurch gekennzeichnet, dass** ein Material mindestens einer als Kathode einer galvanischen Zelle dienenden Elektrode (3; 3a, 3b) Gold, Platin und/oder Silber aufweist.

5. Gargutthermometer (1) nach einem der vorhergehenden Ansprüche, **dadurch gekennzeichnet, dass** ein Material mindestens einer als Anode einer galvanischen Zelle dienenden Elektrode (4) Titan und/oder Magnesium aufweist.

6. Gargutthermometer (1) nach einem der vorhergehenden Ansprüche, **dadurch gekennzeichnet, dass** zu mehreren galvanischen Zellen zugehörige Elektroden (3a, 3b, 4) kaskadiert verschaltet sind.

7. Gargutthermometer (1) nach einem der vorhergehenden Ansprüche, **dadurch gekennzeichnet, dass** das Gargutthermometer (1) einen Gleichspannungswandler (7) aufweist.

8. Gargutthermometer (1) nach einem der vorhergehenden Ansprüche, **dadurch gekennzeichnet, dass** das Gargutthermometer (1) als ein Löffel ausgestaltet ist.

9. Gargutthermometer (1) nach Anspruch 8, **dadurch gekennzeichnet, dass** die Elektroden (3, 4; 3a, 3b, 4) sich an einer Rückseite (O) einer Laffe (5) des Gargutthermometers (1) angeordnet sind.

## Claims

1. Food thermometer (1) with at least one direct current energy generating unit (2), **characterised in that** the at least one direct current energy generating unit (2) comprises a plurality of separate external electrodes (3, 4; 3a, 3b, 4) made of a different metal.

2. Food thermometer (1) according to claim 1, **characterised in that** the electrodes (3, 4; 3a, 3b, 4) have at least one electrode (4) serving as an anode of a galvanic cell, which can be exchanged.

3. Food thermometer (1) according to claim 2, **characterised in that** the at least one electrode (4) serving as an anode can be plugged in.

4. Food thermometer (1) according to one of the preceding claims, **characterised in that** a material of at least one electrode (3; 3a, 3b) serving as a cathode of a galvanic cell comprises gold, platinum and/or silver.

5. Food thermometer (1) according to one of the preceding claims, **characterised in that** a material of at least one electrode (4) serving as an anode of a galvanic cell comprises titanium and/or magnesium.

6. Food thermometer (1) according to one of the preceding claims, **characterised in that** electrodes (3a, 3b, 4) belonging to a plurality of galvanic cells are connected in a cascaded manner.

7. Food thermometer (1) according to one of the preceding claims, **characterised in that** the food thermometer (1) comprises a DC voltage converter (7).

8. Food thermometer (1) according to one of the preceding claims, **characterised in that** the food thermometer (1) is embodied as a spoon.

9. Food thermometer (1) according to claim 8, **characterised in that** the electrodes (3, 4; 3a, 3b, 4) are disposed on a rear side (O) of a bowl (5) of the food thermometer (1).

## Revendications

1. Thermomètre pour aliments à cuire (1) comprenant au moins une unité génératrice de courant continu (2), **caractérisé en ce que** l'au moins une unité génératrice de courant continu (2) présente plusieurs électrodes séparées (3, 4 ; 3a, 3b, 4), situées à l'extérieur, constituées de différents métaux.

2. Thermomètre pour aliments à cuire (1) selon la revendication 1, **caractérisé en ce que** les électrodes (3, 4 ; 3a, 3b, 4) présentent au moins une électrode (4) servant d'anode d'une cellule galvanique, laquelle est interchangeable.

3. Thermomètre pour aliments à cuire (1) selon la revendication 2, **caractérisé en ce que** l'au moins une électrode (4) servant d'anode est enfichable.

4. Thermomètre pour aliments à cuire (1) selon l'une quelconque des revendications précédentes, **caractérisé en ce qu'**une matière au moins d'une électrode (3 ; 3a, 3b) servant de cathode d'une cellule galvanique présente de l'or, du platine et/ou de l'argent.

5. Thermomètre pour aliments à cuire (1) selon l'une quelconque des revendications précédentes, **caractérisé en ce qu'**une matière au moins d'une électrode (4) servant de cathode d'une cellule galvanique présente du titane et/ou du magnésium.

6. Thermomètre pour aliments à cuire (1) selon l'une quelconque des revendications précédentes, **caractérisé en ce que** les électrodes (3a, 3b, 4) correspondant à plusieurs cellules galvaniques sont connectées en cascade.

7. Thermomètre pour aliments à cuire (1) selon l'une quelconque des revendications précédentes, **caractérisé en ce que** le thermomètre pour aliments à cuire (1) présente un convertisseur continu-continu (7).

8. Thermomètre pour aliments à cuire (1) selon l'une quelconque des revendications précédentes, **caractérisé en ce que** le thermomètre pour aliments à cuire (1) est réalisé comme une cuillère.

9. Thermomètre pour aliments à cuire (1) selon la revendication 8, **caractérisé en ce que** les électrodes (3, 4 ; 3a, 3b, 4) sont disposées au dos (O) d'un cuilleron (5) du thermomètre pour aliments à cuire (1).
